Europäisches Patentamt

European Patent Office

Office européen des brevets

(11) Publication number: **0 189 677**
**A2**

# (12) EUROPEAN PATENT APPLICATION

(21) Application number: **85309511.5**

(22) Date of filing: **24.12.85**

(51) Int. Cl.⁴: **C 04 B 35/56**
**C 04 B 35/58**

(30) Priority: **24.12.84 JP 270943/84**
**16.04.85 JP 82033/85**

(43) Date of publication of application:
**06.08.86 Bulletin 86/32**

(84) Designated Contracting States:
**DE FR GB SE**

(71) Applicant: **Director of Institute, Itaru Todoroki**
**1, 807-ban, Aza-Nonoshita Shulumachi**
**Tosu-shi Saga-ken 840(JP)**

(71) Applicant: **Tokyo Kokyo Rozai Co., Ltd**
**3-1, Asamutamachi**
**Ohmuta-shi Fukuoka-ken 836(JP)**

(72) Inventor: **Watanabe, Tadahiko**
**1, 807-Ban, Aza-Nonoshita Shukumachi**
**Tosu-shi, Saga-Ken 841(JP)**

(72) Inventor: **Shobu, Kazuhisa**
**1, 807-Ban, Aza-Nonoshita Shukumachi**
**Tosu-shi, Saga-Ken 841(JP)**

(72) Inventor: **Tsuya, Yuko**
**2-Ban, 1-Chome, Namiki, Sakuramura**
**Niihari-Gun, Ibaraki-Ken 305(JP)**

(72) Inventor: **Enomoto, Yuji**
**2-Ban, 1-Chome, Namiki, Sakuramura**
**Niihari-Gun, Ibaraki-Ken 305(JP)**

(72) Inventor: **Hayakawa, Junshiro**
**3-1, Asamutamachi, Ohmuta-Shi**
**Fukuoka-Ken 836(JP)**

(72) Inventor: **Yagishita, Osamu**
**3-1, Asamutamachi, Ohmuta-Shi**
**Fukuoka-Ken 836(JP)**

(72) Inventor: **Yamamoto, Hideki**
**3-1, Asamutamachi, Ohmuta-Shi**
**Fukuoka-Ken 836(JP)**

(72) Inventor: **Sudoh, Eiichi**
**3-1, Asamutamachi, Ohmuta-Shi**
**Fukuoka-Ken 836(JP)**

(74) Representative: **White, Martin David et al,**
**Marks & Clerk 57/60 Lincoln's Inn Fields**
**London WC2A 3LS(GB)**

(54) Sintered titanium carbo-nitride ceramics.

(57) The present invention is characterized by ceramic materials which is ceramic sintered bodies consisting of 1 - 90 wt% of chromium carbide per the total amount and the rest which is carbonic titanium nitride; 1 - 90 wt% of chromium carbide per the total amount, 0.1 - 5 wt% of $B_4C$ per the total amount and the rest which is titanium carbo-nitride; or further less than 95 wt% of metal boride per the total amount such as Ti or Zr, and is used for cutting tools or wear-resistant machine parts because of high density, high hardness and high strength.

TITLE OF THE INVENTION

Sintered titanium carbo-nitride ceramics.

BACKGROUND OF THE INVENTION

The present invention relates to titanium carbo-nitride ceramics having high density, high hardness and high strength, and such ceramics are used for materials for cutting tools of wear-resistant machine parts.

Tungsten carbide has been mainly using for cutting tool materials, in spite of a lack of the tungsten raw materials in recent year. Therefore, sintered titanium carbo-nitride bodies or titanium diborides bodies have became to attract our attention.

Titanium carbo-nitride exists as solid solution of TiN and TiC, the proportion of carbon and nitrogen in solid solution is easily distributed. It is confirmed by X-ray diffraction that titanium carbo-nitride is complately different material with titanium carbide and titanium nitride, and the material property such as hardness and toughness or the sinterbility are also different. Titanium carbo-nitride has high melting point, high hardness, high toughness and oxidation resistance, and is noted as materials for cutting tools or wear-resistant machine parts. A sintered body of pure titanium carbo-nitride is hardly used for the above-mentioned purposes because the sintered body has low strength for breaking and is brittle.

Composite ceramics between metal boride and titanium carbo-nitride have been already developed by the inventors of the present invention, and are already well-known in Japanese Patent Publication No. 59-18349. Therefore, the present invention is obtained by further development.

SUMMARY OF THE INVENTION

It is an object of the present invention to provide sintered ceramics of high density, high hardness and high strength which are used for cutting tool materials or for wear-resistant machine parts.

An object of the above-mentioned present invention can be achieved by the following combinations.

Sintered ceramics (claim 1 in the present invention) consisting of 1 - 90 wt% of chromium carbide and the rest which is titanium carbo-nitride, in which the mol ratio of carbon and nitrogen is 1:9 - 9:1 ;

Sintered ceramics (claim 4 in the present invention) consisting of claim 1 in the present invention and 0.1 - 5 wt% of $B_4C$ ;

- 3 -

Sintered ceramics (claim 6 in the present invention) consisting of claim 1 in the present invention and less than 95 wt% of metal boride selecting from one or more groups of $TiB_2$, $CrB_2$, $TaB_2$, $MnB_2$, $MoB_2$, $VB_2$, $NbB_2$, $HfB_2$, $AlB_2$, $ZrB_2$, TiB, CrB, TaB, MnB, MoB, VB, NbB, HfB, ZrB, $W_2B_5$ and $Mn_2B_5$ ; and

Sintered ceramics (claim 9 in the present invention) consisting of claim 4 in the present invention and less than 95 wt% of metal boride selecting from one or more groups of $TiB_2$, $CrB_2$, $TaB_2$, $MnB_2$, $MoB_2$, $VB_2$, $NbB_2$, $HfB_2$, $AlB_2$, $ZrB_2$, TiB, CrB, TaB, MnB, MoB, VB, NbB, HfB, ZrB, $W_2B_5$ and $Mn_2B_5$.

DETAILED DESCRIPTION OF THE PREFFERED EMBODIMENT

The present invention is explained as follows:

A component means chromium carbide, B component means titanium carbo-nitride, C component means B C and D component means metal boride selecting from one or more groups of $TiB_2$, $CrB_2$, $TaB_2$, $MnB_2$, $MnB_2$, $VB_2$, $NbB_2$, $HfB_2$, $AlB_2$, $ZrB_2$, TiB, CrB, TaB, CrB, TaB, MnB, MoB, VB, NbB, HfB, ZrB $W_2B_5$ and $Mo_2B_5$.

The material of claim 1 in the present invention:

1 - 90 wt% of A component and B component as the rest.

The material of claim 4 in the present invention:

1 - 90 wt% of A component, 0.1 - 5 wt% of C component and B component as the rest.

The material of claim 6 in the present invention:

1 - 90 wt% of A component and B component as the rest, in which less than 95 wt% of D component is added.

The material of claim 9 in the present invention:

1 - 90 wt% of A component, 0.1 - 5 wt% of C component and B component as the rest, in which less than 95 wt% of D component is added.

There are compounds such as $Cr_3C_2$, $Cr_4C$ or $Cr_7C_3$ in chromium carbide used as A component, these compounds can be used by only one or combinations of two or more groups. It is preferable that the mean grain size of chromium carbide powder is less than $2\mu m$ and less than $1\mu m$ is much better than $2\mu m$.

Titanium carbo-nitridem in which the mol ratio of carbon and nitrogen is between 1:9 and 9:1 is used for B component, and it is hard to obtain ceramic materials of excellent toughness if the mol ratio is out if such range. Titanium carbo-nitride can be used by only one or combinations of two or mote groups. It is preferable that the mean grain size of titanium carbo-nitride is less than $2\mu m$, and less than $1\mu m$ is much better than $2\mu m$. There are usually three kinds of the mol ratios of carbon and nitrogen in titanium carbo-nitride such as 0.7:0.3, 0.5:0.5 and 0.3:0.7 on the market.

The addition amount of chromium carbide as A component is decided at the range from 1 to 90 wt% per the total amount of the mixed powder in the material of claim 1 in the present invention. It is hard to obtain ceramic materials having desired property if such addition amount is less than 1 wt% of more than 90 wt%. Sintered ceramics, in which the addition amount of chromium carbides in claims 1, 4, 6 and 9 are less than 50 wt% per the total amount have excellent strength, hardness and the ratio of porosity.

The material of claim 4 in the present invention consisting of that adding $B_4C$ as C component to the above-mentioned claim 1 is already explained, and a fine powder as the raw powder is preferable with regard to $B_4C$, it is preferable that the mean grain size of $B_4C$ is less than $2\mu m$, and less than $1\mu m$ is much better than $2\mu m$. And addition of 0.1 - 5 wt% of $B_4C$ remarkably helps densification. However, addition of less than 0.1 wt% or more than 5 wt% causes the difficulty of densification and the lowering of hardness.

The present invention shows the materials of claim 6 to claim 11 by adding metal boride as D component for the purpose of development of the properties of the materials of claim 1 to claim 5, and any combinations of the above-mentioned chemical materials can be selected for metal boride as D component. Metal boride powder can be used by only one or combinations of two or more groups. It is preferable that the mean grain size of metal boride powder is less than $2 \mu m$, and less than $1 \mu m$ is much better than $2 \mu m$.

The above-mentioned metal boride powder is used in the proportion of less than 95 wt% per the total amount of the material. An excellent ceramic materials of high strength, high density and high hardness is especially obtained at the range, in which the mixing amount is between 20 - 70 wt%. And also, metal borides which are possible to use a lot especially for industrial purpose are $TiB_2$, $ZrB_2$ and $CrB_2$.

Ceramic raw powder of the present invention are mixed by the above-mentioned components, and are produced by the same methods which are already known as the methods for producing ceramic materials.

For example, the raw powder mixture is packed in a metal mold, is cold-pressed by the pressure of $0.5 - 10$ ton/$cm^2$, is further pressed at less than $0.5 - 10$ ton/$cm^2$ by a cold isostatic press, and the compacted powder is sintered in a vacuum or a neutral or reducing atmosphere such as in argon under the condition of 1300 - 1900°C, for 5 - 300 minutes.

According to an other method, the raw powder mixture is packed in a graphite mold, and is sintered in a vacuum or a neutral or reducing atmosphere such as argon or hydrogen under the condition of 50 - 300 $Kg/cm^2$ of the pressure, 1300 - 2000°C, and for 10 - 200 minutes. This method is hot pressing.

The present invention is explained in the following Embodiment 1 in detail.

(EMBODIMENT 1)

Various proportions of $Cr_3C_2$ powder per the total amount was added to $Ti(C_{0.5}N_{0.5})$ powder, the mixed powder was pressed with a metal mold, and the pressed powder was further uniformly compacted by the pressure of 3 $ton/cm^2$, using a cold isostatic press.

The pressed powder obtained in the above-mentioned process was sintered in a vacuum at 1850°C for 90 minutes.

The obtained ceramic materials have high density, high strength and high hardness, and its results are shown in the following Table 1. And the result in the case of that $Cr_3C_2$ powder is not added is also shown in Table 1.

TABLE 1

| No. | $Cr_3C_2$ CONTENTS<br><br>(wt.% per the<br>total amount) | PROPERTIES OF SINTERED BODIES | | |
|---|---|---|---|---|
| | | TRANSVERSE<br>RUPTURE<br>STRENGTH<br>$(Kg/mm^2)$ | VICKERS<br>HARDNESS<br>Hv $(Kg/mm^2)$ | POROSITY |
| 1 | 0 | 35 | 1400 | A LARGE AMOUNT |
| 2 | 1 | 35 | 1500 | A LITTLE |
| 3 | 5 | 35 | 1600 | NONE |
| 4 | 10 | 35 | 1700 | NONE |
| 5 | 20 | 50 | 2200 | NONE |
| 6 | 30 | 60 | 2300 | NONE |
| 7 | 40 | 60 | 2300 | NONE |
| 8 | 90 | 35 | 1600 | NONE |

- 9 -

(EMBODIMENT 2)

Ten(10) wt% and 20 wt% of $Cr_3C_2$ powder per the total amount was added to $Ti(C_{as}N_{as})$, the mixed powder is pressed with a metal mold, and the compacted powder was further uniformly pressed by the pressure of 3 ton/cm$^2$, using a cold isostatic press.

The compacted powder obtained in the above-mentioned process was sintered in a vacuum at 1500 - 1800°C for 90 minutes.

Dense ceramics without porosity were obtained.

These properties are shown in the following Table 2.

TABLE 2

| No. | $Cr_3C_2$ CONTENTS (wt.% per the total amount) | SINTERING TEMPERATURE (°C) | PROPERTIES OF SINTERED BODIES | | |
|---|---|---|---|---|---|
| | | | TRANSVERSE RUPTURE STRENGTH (Kg/mm$^2$) | VICKERS HARDNESS Hv (Kg/mm$^2$) | POROSITY |
| 9 | 10 | 1550 | 65 | ——— | NONE |
| 10 | | 1600 | 75 | 2000 | NONE |
| 11 | | 1700 | 60 | ——— | NONE |
| 12 | | 1800 | 40 | ——— | NONE |
| 13 | 20 | 1550 | 40 | ——— | NONE |
| 14 | | 1600 | 55 | ——— | NONE |
| 15 | | 1700 | 60 | ——— | NONE |
| 16 | | 1800 | 70 | 2200 | NONE |

(EMBODIMENT 3)

Ten(10) wt% of $Cr_3C_2$ powder per the total amount was added to titanium carbo-nitride powder in which proportion of carbon and nitride is each different, the mixed powder is pressed with a metal mold, and the compacted powder was further uniformly pressed by the pressure of 3 ton/$cm^2$, using a cold isostatic press.

The compacted powder obtained in the above-mentioned process was sintered in a vacuum at each temperature shown in Table 3 for 90 minutes.

Dense ceramic materials without porosity were obtained.

Those properties are shown in the following Table 3, and the results in the case of that titanium nitride and titanium carbide are used in place of titanium carbo-nitride for comparison are also shown in Table 3.

TABLE 3

| No. | TITANIUM COMPOUNDS | SINTERING TEMPERATURE (°C) | PROPERTIES OF SINTERED COMPACTS | | |
| --- | --- | --- | --- | --- | --- |
| | | | TRANSVERSE RUPTURE STRENGTH (Kg/mm$^2$) | VICKERS HARDNESS Hv (Kg/mm$^2$) | POROSITY |
| 17 | TiN | 1800 | 50 | 1500 | NONE |
| 18 | $TiC_{0.2}N_{0.8}$ | 1700 | 70 | 1800 | NONE |
| 19 | $TiC_{0.3}N_{0.7}$ | 1600 | 75 | 2000 | NONE |
| 20 | $TiC_{0.7}N_{0.3}$ | 1600 | 75 | 2300 | NONE |
| 21 | $TiC_{0.8}N_{0.2}$ | 1600 | 70 | 2300 | NONE |
| 22 | TiC | 1600 | 50 | 2300 | NONE |

(EMBODIMENT 4)

Each proportions of $Cr_3C_2$ powder and TiB powder per the total amount were added to $Ti(C_{0.5}N_{0.5})$ powder, the mixed powder was pressed with a metal mold, and the pressed powder was further uniformly compacted by the pressure of 3 ton/cm$^2$, using a cold isostatic press.

Dense ceramic materials without porosity were obtained.

Those properties are shown in the following Table 4, and No.31 in Table 4 is a comparative embodiment.


TABLE 4

| NO. | $Cr_3C_2$, $TiB_2$ CONTENTS (wt.% per the total amount) | | PROPERTIES OF SINTERED COMPACTS | | |
| | $Cr_3C_2$ | $TiB_2$ | TRANSVERSE RUPTURE STRENGTH ($Kg/mm^2$) | VICKERS HARDNESS Hv ($Kg/mm^2$) | POROSITY |
|---|---|---|---|---|---|
| 23 | 1 | 30 | 70 | 2000 | NONE |
| 24 | 5 | 30 | 70 | 2000 | NONE |
| 25 | 40 | 30 | 70 | 2200 | NONE |
| 26 | 50 | 30 | 70 | 2200 | NONE |
| 27 | 90 | 5 | 50 | 2000 | NONE |
| 28 | 30 | 5 | 70 | 2300 | NONE |
| 29 | 30 | 30 | 70 | —— | NONE |
| 30 | 30 | 60 | 70 | —— | NONE |
| 31 * | 1 | 95 | 59 | —— | EXIST |

0189677

- 13 -

(EMBODIMENT 5)

The mixed powder consisting of that adding 10 wt% of $Cr_3C_2$ powder per the total amount to $Ti(C_{0.5}N_{0.5})$ and the mixed powder consisting of that adding 5 wt% of $Cr_3C_2$ powder per the total amount and 30 wt% of $TiB_2$ powder per the total amount were each packed in a graphite mold, were pressed by a die press of 200 Kg/cm$^2$, and were sintered at 1600°C for the former and 1700°C for the latter in a vacuum for 60 minutes.

The obtained dense ceramic materials do not have any porosity, and have high tranverse rupture strength and high hardness.

Those properties are shown in the following Table 5.

TABLE 5

| No. | COMPOSITIONS OF THE RAW MATERIALS | SINTERING TEMPERATURE (°C) | PROPERTIES OF SINTERED COMPACTS | | |
|---|---|---|---|---|---|
| | | | TRANSVERSE RUPTURE STRENGTH (Kg/mm$^2$) | VICKERS HARDNESS Hv (Kg/mm$^2$) | POROSITY |
| 32 | $TiC_{0.5}N_{0.5}$ + 10% $Cr_3C_2$ | 1600 | 100 | 2500 | NONE |
| 33 | $TiC_{0.5}N_{0.5}$ + 5% $Cr_3C_2$ + 30% $TiB_2$ | 1700 | 100 | 2500 | NONE |

(EMBODIMENT 6)

The mixed powders consisting of various proportions of $Cr_3C_2$, $TiB_2$ and $B_4C$ powder per the total amount were mixed to $TiC_{0.4}N_{0.5}$, TiC and TiN powder as shown in Table 6, and the pressed powder bodies were obtained with a metal mold and a cold isostatic press. The compacted powder bodies were each sintered in a vacuum at each temperatures shown in Table 6 for 90 minutes, and the results of transverse rupture strength, porosity and Vickers hardness of each obtained ceramic sintered bodies are shown in the following Table 6.

Even specimens No.34, No41, No.47 and No.50, in which $B_4C$ is not added show the lowering of the percentage of porosity by adding $B_4C$, sintered dense bodies are obtained, and their transverse rupture strength and hardness become higher. However, too much amount of adding of $B_4C$ shows the lowering of transverse rupture and hardness, and the percentage of porosity also increses by adding more than 5 wt% of $B_4C$. Therefore, the adding of less than 5 wt% of B C is most preferable.

TABLE 6                    — 15 —                    **0189677**

| No. | COMPOSITIONS (wt%) | SINTERING TEMPERATURE ($^\circ$C) |
|---|---|---|
| 34 * | $TiC_{0.5}N_{0.5}$ — $20Cr_3C_2$ | 1700 |
| 35 | $TiC_{0.5}N_{0.5}$ — $20Cr_3C_2$ — $0.1B_4C$ | 1700 |
| 36 | $TiC_{0.5}N_{0.5}$ — $20Cr_3C_2$ — $1B_4C$ | 1700 |
| 37 | $TiC_{0.5}N_{0.5}$ — $20Cr_3C_2$ — $2B_4C$ | 1700 |
| 38 | $TiC_{0.5}N_{0.5}$ — $20Cr_3C_2$ — $3B_4C$ | 1700 |
| 39 | $TiC_{0.5}N_{0.5}$ — $20Cr_3C_2$ — $2B_4C$ | 1600 |
| 40 | $TiC_{0.5}N_{0.5}$ — $30Cr_3C_2$ — $2B_4C$ | 1650 |
| 41 * | $TiC_{0.5}N_{0.5}$ — $30Cr_3C_2$ — $30TiB_2$ | 1850 |
| 42 | $TiC_{0.5}N_{0.5}$ — $30Cr_3C_2$ — $30TiB_2$ — $0.1B_4C$ | 1850 |
| 43 | $TiC_{0.5}N_{0.5}$ — $30Cr_3C_2$ — $30TiB_2$ — $1B_4C$ | 1850 |
| 44 | $TiC_{0.5}N_{0.5}$ — $30Cr_3C_2$ — $30TiB_2$ — $2B_4C$ | 1850 |
| 45 | $TiC_{0.5}N_{0.5}$ — $30Cr_3C_2$ — $30TiB_2$ — $3B_4C$ | 1850 |
| 46 | $TiC_{0.5}N_{0.5}$ — $30Cr_3C_2$ — $30TiB_2$ — $5B_4C$ | 1850 |
| 47 * | $TiC$ — $20Cr_3C_2$ | 1700 |
| 48 | $TiC$ — $20Cr_3C_2$ — $2B_4C$ | 1700 |
| 49 | $TiC$ — $20Cr_3C_2$ — $30TiB_2$ — $1B_4C$ | 1850 |
| 50 * | $TiN$ — $20Cr_3C_2$ | 1700 |
| 51 | $TiN$ — $20Cr_3C_2$ — $2B_4C$ | 1700 |
| 52 | $TiN$ — $30Cr_3C_2$ — $30TiB_2$ — $1B_4C$ | 1850 |

\*    The materials in which $B_4C$ is not added.

| TRANSVERSE RUPTURE STRENGTH ($Kg/mm^2$) | POROSITY (%) | VICKERS HARDNESS (Hv) ($Kg/mm^2$) |
|---|---|---|
| 60 | 4 | 2000 |
| 60 | 2 | 2000 |
| 65 | 0.1 | 2100 |
| 70 | 0.05 | 2200 |
| 65 | 0.5 | 2100 |
| 55 | 4 | —— |
| 70 | 0.9 | —— |
| 70 | 1.0 | 2300 |
| 70 | 0.8 | 2400 |
| 80 | 0.5 | 2400 |
| 70 | 0.5 | 2400 |
| 60 | 0.5 | 2400 |
| 30 | 7 | |
| 60 | 3 | 2000 |
| 70 | 0.05 | 2200 |
| 80 | 0.5 | 2400 |
| 50 | 3 | 1800 |
| 70 | 0.05 | 2000 |
| 80 | 0.05 | 2200 |

As mentioned in the above, TiC, TiN and TiCN ceramic materials of high density, high hardness and high strength are obtained in the present invention, and are real good for materials for cutting tools or wear-resistant materials.

Additionally, ceramic materials in the present invention have $Cr_2O_3$ on the surfaces by using at more than $600°C$ in the air, and the coefficient of friction becomes low. Therefore, ceremic materials in the present invention are also excellent for the material for sliding machine parts which are used at a high temperature range.

- 18 -

WHAT WE CLAIM ARE:

1.  Ceramic materials consisting of that sintering the mixed powder consisting of 1 - 90 wt% of chromium carbide powder(A) per the total amount and the rest(B) which is titanium carbo-nitride, in which the mol ratio of carbo and nitrogen is 1:9 - 9:1.

2.  Ceramic materials according to claim 1, wherein said chromium carbide content is 1 - 50 wt% per the total amount.

3.  Ceramic materials according to claim 1, wherein said chromium carbide content is 1 - 50 wt% per the total amount and the mol ratio of carbon and nitrogen in titanium carbo-nitride is 5:5, 7:3, and 3:7.

4.  Ceramic materials consisting of that sintering the mixed powder consisting of 1 - 90 wt% of chromium carbide powder(A) per the total amount, 0.1 - 5 wt.% of B C powder(C) per the total amount and the rest(B) which is titanium carbo-nitride, in which the mol ratio of carbon and nitrogen is

- 19 -

1:9 - 9:1.

5.    Ceramic materials according to claim 4, wherein
      said chromium carbide content is 1 - 50 wt% per
      the total amount.

6.    Ceramic materials consisting of that sintering
      the mixed powder consisting of 1 - 90 wt% of
      chromium carbide powder(A) per the total amount,
      the rest(B) which is titanium carbo-nitride,
      in which the mol ratio of carbon and nitrogen is
      1:9 - 9:1 and further less than 95 et% of metal
      boride powder(D) per the total amount consisting
      of one or more groups of $TiB_2$, $CrB_2$, $TaB_2$, $MnB_2$,
      $MoB_2$, $VB_2$, $NbB_2$, $HfB_2$, $AlB_2$, $ZrB_2$, TiB, CrB, TaB,
      MnB, VB, NbB, HfB, ZrB, $W_2B_5$ and $Mo_2B_5$.

7.    Ceramic materials according to claim 6, wherein
      said chromium carbide content is 1 - 50 wt% per
      the total amount.

8.    Ceramic materials according to claim 6, wherein
      said chromium carbide content is 1 - 50 wt% per
      the total amount and metal boride consists of one or more groups from $TiB_2$, $ZrB_2$ and $CrB_2$.

9. Ceramic materials consisting of that sintering the mixed powder consisting of 1 - 90 wt% of chromium carbide powder(A) per the total amount, 0.1 - 5 wt% of B C powder(C) per the total amount, the rest(B) which is titanium carbo-nitride, in which the mol ratio of carbon and nitrogen is 1:9 - 9:1 and further less than 95 wt% of metal boride powder(D) per the total amount consisting of one or more groups of $TiB_2$, $CrB_2$, $TaB_2$, $MnB_2$, $MoB_2$, $VB_2$, $NbB_2$, $HfB_2$, $AlB_2$, $ZrB$, $TiB$, $CrB$, $TaB$, $MnB$, $MoB$, $VB$, $NbB$, $HfB$, $ZrB$, $W_2B_5$ and $Mo_2B_5$.

10. Ceramic materials according to claim 9, wherein said chromium carbide content is 1 - 50 wt% per the total amount.

11. Ceramic materials according to claim 9, wherein said chromium carbide content is 1 - 50 wt% per the total amount and metal boride consists of one or more groups from $TiB_2$, $ZrB_2$ and $CrB_2$.